# EUROPEAN PATENT APPLICATION

(11) **EP 4 475 283 A1**
(43) Date of publication of application: **11.12.2024**
(21) Application number: 24150281.4
(22) Date of filing: 04.01.2024
(51) Int. Cl.: H01M 50/102, H01M 50/107, H01M 50/148, H01M 50/152, H01M 50/169, H01M 50/531, H01M 50/109, H01M 50/153, H01M 50/181, H01M 50/186

(54) **BATTERY STRUCTURE AND PREPARATION METHOD THEREFOR**

(30) Priority: 08.06.2023 CN 202310680451
(71) Applicant: Dongguan Lidea Electronics Co., Ltd, Guangdong Dongguan (CN)
(72) Inventor: LIAO, Jianhua, Dongguan (CN); WU, Yongzhen, Dongguan (CN)
(74) Representative: Sun, Yiming

(57) **Abstract**

The present invention relates to a battery structure and a preparation method therefor. The battery structure includes: a housing (10), a cap assembly (20), and an electrode assembly, where an accommodating cavity is provided in the housing, the electrode assembly is placed in the accommodating cavity, the accommodating cavity is further filled with electrolyte, two electrodes are arranged on the electrode assembly, one of the two electrodes is electrically connected to the cap assembly, and the other of the two electrodes is electrically connected to the housing, and the housing is connected to a side wall after being combined with the cap assembly. In the present invention, a wall thickness is reduced, which may effectively increase a volume of the accommodating cavity, to increase a filling amount of electrolyte, thereby effectively increasing a battery energy density.

## Description

### TECHNICAL FIELD

The present invention relates to the field of battery technologies, and in particular, to a battery structure and a preparation method therefor.

### BACKGROUND

A rechargeable lithium-ion battery is widely used in a handheld electronic device, such as a coin cell in a mobile phone and Bluetooth headsets. In a small and sophisticated device, a battery volumetric energy density is a key consideration, such as hearing aids, wireless Bluetooth headsets, an electronic watch, a gastroenteroscopy device, and the like.

A conventional button battery generally uses a double-cylindrical upper shell and lower shell. The upper shell and the lower shell are overlapped and sleeved together, and then there is a sealing insulating layer in the middle. Because an overall volume of the button battery is limited, and the upper shell, the lower shell, and the sealing insulating layer are all thick, a volume of a battery cavity may only be compressed to ensure that the overall volume remains unchanged. As a result, a battery energy density fails to be increased. Therefore, increasing the energy density in a limited volume is an urgent problem that needs to be resolved.

### SUMMARY

An objective of the present invention is to overcome shortcomings of the related art, and provide a battery structure and a preparation method therefor.

To resolve the foregoing technical problem, the following technical solutions are used in the present invention:
According to a first aspect, embodiments of the present invention provide a battery structure, including: a housing, a cap assembly, and an electrode assembly, where an accommodating cavity is provided in the housing, the electrode assembly is placed in the accommodating cavity, the accommodating cavity is further filled with electrolyte, two electrodes are arranged on the electrode assembly, one of the two electrodes is electrically connected to the cap assembly, and the other of the two electrodes is electrically connected to the housing, and the housing is connected to a side wall after being combined with the cap assembly.

In a specific embodiment, the cap assembly includes a cover body, a pressing plate, and an insulating layer; and the insulating layer is located between the cover body and the pressing plate, an opening is provided on the cover body, a boss is arranged on the pressing plate, the boss extends from the opening, and the housing is connected to the cover body.

In a specific embodiment, an upper end surface is arranged on the housing, a connecting wall extends from the cover body, a lower end surface is arranged on the connecting wall, and the upper end surface is connected to the lower end surface.

In a specific embodiment, the upper end surface is welded to the lower end surface, to implement a sealing connection.

In a specific embodiment, a thickness of the connecting wall is the same as a thickness of the housing.

In a specific embodiment, the thickness of the housing ranges from 0.1 mm to 0.25 mm.

In a specific embodiment, the insulating layer is an insulating ring, and a width of the insulating ring is greater than a width in which the pressing plate overlaps the cover body.

In a specific embodiment, the width in which the pressing plate overlaps the cover body ranges from 0.5 mm to 10 mm.

In a specific embodiment, the housing is in a shape of a cylinder, and a cross section of the housing is in a shape of an ellipse, a square, or a heart.

Compared with the related art, the battery structure in the present invention has the following beneficial effects: an accommodating cavity is provided in the housing, the electrode assembly is placed in the accommodating cavity, the accommodating cavity is further filled with electrolyte, two electrodes are arranged on the electrode assembly, one of the two electrodes is electrically connected to the cap assembly, and the other of the two electrodes is electrically connected to the housing, and the housing is connected to a side wall after being combined with the cap assembly; and compared with multi-layered side walls of a conventional button battery, a wall thickness is reduced, which may effectively increase a volume of the accommodating cavity, to increase a filling amount of electrolyte, thereby effectively increasing a battery energy density.

According to a second aspect, embodiments of the present invention provide a preparation method for a battery structure, which uses the battery structure and includes the following steps:
placing the insulating layer between the cover body and the pressing plate, and then assembling, heating, and cooling the cover body and the pressing plate, to form the cap assembly;
placing the electrode assembly into the housing, and then electrically connecting two electrodes of the electrode assembly to the cap assembly and the housing respectively; and
injecting the electrolyte into the housing, and then welding and sealing the cap assembly and the housing, to complete preparation of the battery structure.

Compared with the related art, beneficial effects of the preparation method for the battery structure in the present invention are: placing the insulating layer between the cover body and the pressing plate, and then assembling, heating, and cooling the cover body and the pressing plate, to form the cap assembly; then electrically connecting two electrodes of the electrode assembly to the cap assembly and the housing respectively; and finally injecting the electrolyte into the housing, and then welding and sealing the cap assembly and the housing, to complete preparation of the battery structure. Compared with the multi-layered side walls of the conventional button battery, the wall thickness is reduced, which may effectively increase the volume of the accommodating cavity, to increase the filling amount of the electrolyte, thereby effectively increasing the battery energy density.

The following further describes the present invention in detail with reference to the accompanying drawings and specific embodiments.

### BRIEF DESCRIPTION OF THE DRAWINGS

To describe the technical solutions in the embodiments of the present invention more clearly, the following briefly introduces the accompanying drawings required for describing the embodiments or the related art. Apparently, the accompanying drawings in the following description show merely some embodiments of the present invention, and a person of ordinary skill in the art may still derive other drawings from these accompanying drawings without creative efforts.
FIG. 1 is a schematic diagram of a structure of a battery structure according to an embodiment of the present invention;
FIG. 2 is a schematic cross-sectional view of a battery structure according to an embodiment of the present invention;
FIG. 3 is an exploded schematic diagram of a battery structure according to an embodiment of the present invention; and
FIG. 4 is a schematic flowchart of a preparation method for a battery structure according to an embodiment of the present invention.

### DETAILED DESCRIPTION

To make the objectives, technical solutions, and advantages of the present invention clearer and more comprehensible, the following further describes the present invention in detail with reference to the accompanying drawings and specific implementations.

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

In the description of the present invention, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", and "counterclockwise" are orientations or position relationship shown based on the accompanying drawings, and are merely used for describing the present invention and simplifying the description, rather than indicating or implying that the apparatus or element should have a particular orientation or be constructed and operated in a particular orientation, and therefore, should not be construed as a limitation on the present invention.

In addition, the terms "first" and "second" are used merely for the purpose of description, and shall not be construed as indicating or implying relative importance or implying a quantity of indicated technical features. Therefore, a feature limited by "first" or "second" may explicitly or implicitly include one or more features. In the descriptions of the present invention, unless otherwise explicitly specified, "multiple" means two or more than two.

In the description of the present invention, unless otherwise explicitly specified or defined, the terms such as "mount", "install", "connect", and "connection" should be understood in a broad sense. For example, the connection may be a connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present invention according to specific situations.

In the present invention, unless otherwise explicitly stipulated and restricted, that a first feature is "on" or "under" a second feature may include that the first and second features are in direct contact, or may include that the first and second features are not in direct contact but in contact by using other features therebetween. In addition, that the first feature is "on", "above", or "over" the second feature includes that the first feature is right above and on the inclined top of the second feature or merely indicates that a level of the first feature is higher than that of the second feature. That the first feature is "below", "under", or "beneath" the second feature includes that the first feature is right below and at the inclined bottom of the second feature or merely indicates that a level of the first feature is lower than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In the present specification, schematic representations of the above terms should not be understood as being directed to the same embodiments or examples. In addition, the described specific features, structures, materials, or characteristics may be combined in a proper manner in any one or more of the embodiments or examples. In addition, a person skilled in the art may combine different embodiments or examples described in this specification.

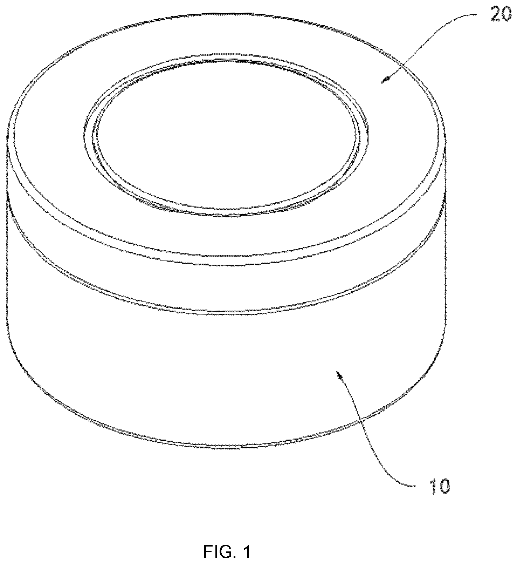

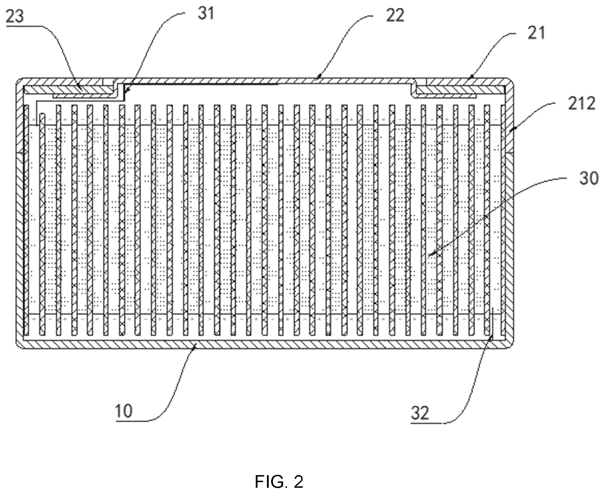

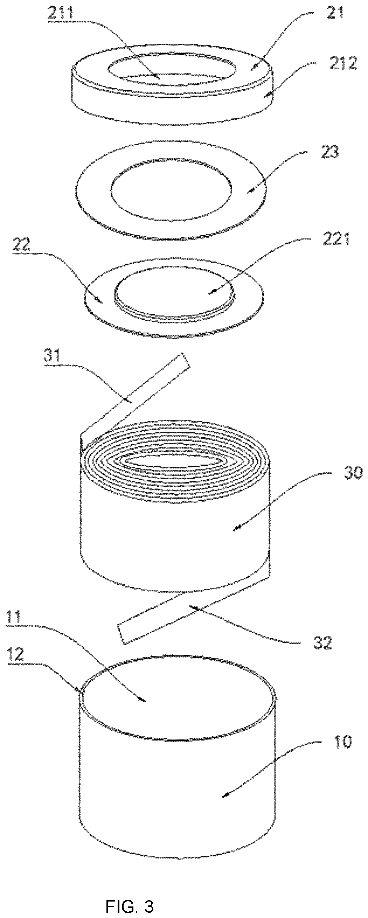

Referring to FIG. 1 to FIG. 3, the present invention discloses a battery structure, including: a housing 10, a cap assembly 20, and an electrode assembly 30, where an accommodating cavity 11 is provided in the housing 10, the electrode assembly 30 is placed in the accommodating cavity 11, the accommodating cavity 11 is further filled with electrolyte (not shown in the figure), two electrodes are arranged on the electrode assembly 30, one of the two electrodes is electrically connected to the cap assembly 20, and the other of the two electrodes is electrically connected to the housing 10, and the housing 10 is connected to a side wall after being combined with the cap assembly 20.

In an embodiment, the electrodes include a positive electrode 31 and a negative electrode 32. The positive electrode 31 is electrically connected to the cap assembly 20 or the housing 10, and the negative electrode 32 is electrically connected to the housing 10 or the cap assembly 20. Preferably, the positive electrode 31 is electrically connected to the cap assembly 20, and the negative electrode 32 is electrically connected to the housing 10.

Specifically, in the battery structure, an accommodating cavity 11 is provided in the housing 10, the electrode assembly 30 is placed in the accommodating cavity 11, the accommodating cavity 11 is further filled with electrolyte, two electrodes are arranged on the electrode assembly 30, one of the two electrodes is electrically connected to the cap assembly 20, and the other of the two electrodes is electrically connected to the housing 10, and the housing 10 is connected to a side wall after being combined with the cap assembly 20, to implement sealing; and compared with multi-layered side walls of a conventional button battery, a wall thickness is reduced, which may effectively increase a volume of the accommodating cavity 11, to increase a filling amount of electrolyte, thereby effectively increasing a battery energy density.

Specifically, the electrolyte uses an existing technology, and this is not described in detail herein.

In an embodiment, the cap assembly 20 includes a cover body 21, a pressing plate 22, and an insulating layer 23; and the insulating layer 23 is located between the cover body 21 and the pressing plate 22, an opening 211 is provided on the cover body 21, a boss 221 is arranged on the pressing plate 22, the boss 221 extends from the opening 211, and the housing 10 is connected to the cover body 21.

Specifically, the insulating layer 23 is arranged between the cover body 21 and the pressing plate 22, to implement an insulating and sealing effect. Both the cover body 21 and the pressing plate 22 are made of metal. The cover body 21, the pressing plate 22, and the insulating layer 23 heat the metal by using high frequency induction, so that the insulating layer 23 is closely attached to the cover body 21 and the pressing plate 22 upon reaching a molten state, and is fused into the cover body 21 and the pressing plate 22 after cooling, resulting in a good sealing and insulating effect. In other embodiments, a heating block or a heating device may also be used to heat the cap assembly 20 at a constant temperature, to achieve the same effect, or a combination of the two heating manners may be used.

Preferably, both the cover body 21 and the pressing plate 22 are made of stainless steel, which has a high strength and good corrosion resistance.

Further, in actual application, when a high temperature occurs inside the battery structure, the insulating layer 23 reaches a molten state, a gap is generated between the cover body 21 and the pressing plate 22, and gas inside the battery structure flows out along the gap, which reduces the possibility of explosion, and achieves an explosion-proof effect.

In an embodiment, an upper end surface 12 is arranged on the housing 10, a connecting wall 212 extends from the cover body 21, a lower end surface (not shown in the figure) is arranged on the connecting wall 212, and the upper end surface 12 is connected to the lower end surface.

Specifically, the connecting wall 212 extends from the cover body 21, the lower end surface is arranged on the connecting wall 212, and the upper end surface 12 is connected to the lower end surface. The connecting wall 212 and the housing 10 are butted to form a good welding line, and the upper end surface 12 is welded to the lower end surface, to implement a sealing connection. Laser welding is performed on the battery structure from a side surface, which may effectively improve a yield. Preferably, to increase a volume of the accommodating cavity 11 of the battery, butt welding is used. Laser welding is used. Specific welding parameters are as follows: A welding current ranges from 15 to 50A, a pulse width ranges from 0.5 to 5 ms, a frequency/duty cycle is 40/50%, a starting speed ranges from 10 to 25 mm/s, a processing speed ranges from 5 to 200 mm/s, an acceleration ranges from 5 to 20 mm/s², and a spot diameter ranges from 0.1 to 0.5 mm.

In an embodiment, a thickness of the connecting wall 212 is the same as a thickness of the housing 10, so that a contact surface of the connecting wall 212 is aligned with a contact surface of the housing 10. In this way, a welding effect between the cover body 21 and the housing 10 is better, and the sealing effect is better.

In an embodiment, a specific thickness value of the housing 10 may be set as required, and is not specifically limited herein. Preferably, the thickness of the housing 10 ranges from 0.1 mm to 0.25 mm.

In an embodiment, the insulating layer 23 is an insulating ring, and a width of the insulating ring is greater than a width in which the pressing plate 22 overlaps the cover body 21.

Specifically, the insulating ring is designed to have an annular shape that engages with the cover body 21 and the pressing plate 22. The width of the insulating ring is greater than the width in which the pressing plate 22 overlaps the cover body 21, to provide a good insulating effect. In addition, the insulating ring cannot cover a region of the boss 221.

Preferably, the insulating layer 23 is made of three layers of polypropylene material. The material has good insulating and sealing properties.

In an embodiment, the width in which the pressing plate 22 overlaps the cover body 21 ranges from 0.5 mm to 10 mm. The width of the overlapping part is a width of a battery sealing line.

Specifically, a specific thickness value of the width in which the pressing plate 22 overlaps the cover body 21 may be set as required, and is not specifically limited herein. Preferably, the width of the overlapping part ranges from 0.5 mm to 10 mm.

In an embodiment, the housing 10 is in a shape of a cylinder, and a cross section of the housing is in a shape of a circle, an ellipse, a square, or a heart, to be applied to different scenarios.

In an embodiment, the electrode includes a positive electrode 31 and a negative electrode 32. The positive electrode 31 is made of aluminum foil, and the negative electrode 32 is made of copper foil.

Specifically, the positive electrode 31 and the negative electrode 32 are separated by a battery separator, and are spirally wound or laminated to form an electrode assembly 30. The electrode assembly 30 implements an energy storage function. The battery separator refers to a film made of plastics such as polypropylene.

Specifically, an active material is evenly coated on two surfaces of the aluminum foil with a thickness ranging from 0.06 to 0.016 mm to serve as the positive electrode 31. An active material is evenly coated on two surfaces of the copper foil with a thickness ranging from 0.06 to 0.012 mm to serve as the negative electrode 32. The active material includes lithium cobalt oxide, lithium titanate, or graphite. The lithium cobalt oxide and the lithium titanate are used for the positive electrode 31, and the graphite is used for the negative electrode 32.

Preferably, the positive electrode 31 is electrically connected to the boss 221, the negative electrode 32 is electrically connected to a bottom portion of the housing 10, to form an electrical cycle, and the boss 221 is configured to output electric energy to the outside.

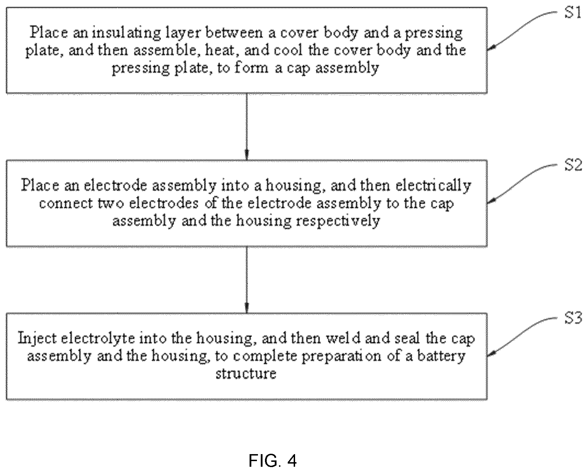

Referring to FIG. 4, the present invention further discloses a preparation method for a battery structure, which uses the battery structure and includes the following steps:
S1: Place an insulating layer between a cover body and a pressing plate, and then assemble, heat, and cool the cover body and the pressing plate, to form a cap assembly.

In an embodiment, a mold is used as required to stamp the cover body, the pressing plate, and the housing for use in advance. A mold of a corresponding shape is used to make a sealing insulating glue into a sheet-shaped insulating layer for use. An electrode assembly of a corresponding shape and size is made as required for use.

Specifically, the prepared insulating layer is placed between the cover body and the pressing plate, and then the cover body and the pressing plate are assembled, and then combined together through a fixture device to form a cap assembly. Specific set process parameters are shown in Table 1:

**Table 1**

| Device name | Item | Parameter |
|---|---|---|
| Tooling fixture | Concentricity of three accessories | ±0.1 mm |
| High frequency induction heating device | Frequency | 800±200 KHZ |
| | Current | 5±2A |
| | Heating duration | 5±3 seconds |
| | Cooling water | ≥0.3 MPa/≥3 L/min |
| Thermostatic device | Temperature | 150±20°C |
| | Duration | 8±2s |
| | Pressure | 5±2g |

S2: Place an electrode assembly into a housing, and then electrically connect two electrodes of the electrode assembly to the cap assembly and the housing respectively.

Specifically, the electrode assembly is placed into the housing, the positive electrode is electrically connected to the boss, and the negative electrode is electrically connected to the housing.

Electrical connection is performed by using resistance welding or laser welding. Specifically, parameters of resistance welding are shown in Table 2:

**Table 2**

| Device name | Item | Parameter |
|---|---|---|
| Transistor resistance | Power | 1.5±0.5 kw |
| welding machine | Current | 0.5±0.2 KA |
| | Duration | 5±0.5 ms |
| | Pressure | 1 to 5 Mpa |
| Tooling fixture | Size | ±1 mm |

Specifically, after step S2, the method further includes: placing a semi-finished product after electrical connection into a high vacuum environment for baking and dehumidification. Specific parameters are shown in Table 3:

**Table 3**

| Device name | Item | Parameter |
|---|---|---|
| Vacuum pump | Air pressure in an oven | 30±10 pa |
| Oven | Temperature | 88±3°C |
| | Duration | 10H |
| Remarks | Total baking duration is 10 hours, and air pressure in the oven cycles once an hour between 20 pa and the atmospheric pressure. When the pressure in the oven is quickly converted to the atmospheric pressure at 20 pa, dry gas is filled in the oven, to optimize internal dryness of the battery. | |

S3: Inject electrolyte into the housing, and then weld and seal the cap assembly and the housing, to complete preparation of the battery structure.

Specifically, the electrolyte is injected into the housing. After the electrolyte is injected, a laser is used to weld a contact surface between the cover body and the housing in an environment with a relative humidity of less than 1%, to complete packaging of the battery. Parameters of laser welding are shown in Table 4:

**Table 4**

| | |
|---|---|
| Welding current | 15 to 50A |
| Pulse width | 0.5 to 5 ms |
| Frequency/duty cycle | 40/50% |
| Starting speed | 10 to 25 mm/s |
| Processing speed | 5 to 200 mm/s |
| Acceleration | 5--20 mm/s² |
| Spot diameter | 0.1 to 0.5 mm |

Specifically, after S4, the method further includes: performing activation, formation, and capacity division on the welded battery, to complete the battery preparation. Activation refers to fully soaking a battery core into the electrolyte after the electrolyte is injected; formation refers to precharging and activating the battery; and capacity division refers to testing a battery capacity.

Table 5 shows performance comparison between the battery prepared in the present invention and the conventional button battery:

**Table 5**

| | Capacity | Service life | Storage | Remarks |
|---|---|---|---|---|
| Conventional button battery | 60 mAh | 500 charge and discharge cycles | 3 to 6 months | With the same appearance and volume |
| Battery in the present invention | 90 mAh | More than 1000 charge and discharge cycles | More than one year | |

The preparation method for the battery structure in the present invention are: placing the insulating layer between the cover body and the pressing plate, and then assembling, heating, and cooling the cover body and the pressing plate, to form the cap assembly; then electrically connecting two electrodes of the electrode assembly to the cap assembly and the housing respectively; and finally injecting the electrolyte into the housing, and then welding and sealing the cap assembly and the housing, to complete preparation of the battery structure. Compared with the multi-layered side walls of the conventional button battery, the wall thickness is reduced, which may effectively increase the volume of the accommodating cavity, to increase the filling amount of the electrolyte, thereby effectively increasing the battery energy density.

The battery structure in the present invention has features of a simple structure, a low manufacturing cost, and good sealing performance, and may increase a volume of the battery cavity, and may further have various shapes.

The foregoing embodiments are preferred implementation solutions of the present invention. In addition, the present invention may be further implemented in other manners. Any obvious substitutions fall within a protection scope of the present invention without departing from the concept of the technical solution.

## Claims

1. A battery structure, comprising: a housing, a cap assembly, and an electrode assembly, wherein an accommodating cavity is provided in the housing, the electrode assembly is placed in the accommodating cavity, the accommodating cavity is further filled with electrolyte, two electrodes are arranged on the electrode assembly, one of the two electrodes is electrically connected to the cap assembly, and the other of the two electrodes is electrically connected to the housing, and the housing is connected to a side wall after being combined with the cap assembly.

2. The battery structure according to claim 1, wherein the cap assembly comprises a cover body, a pressing plate, and an insulating layer; and the insulating layer is located between the cover body and the pressing plate, an opening is provided on the cover body, a boss is arranged on the pressing plate, the boss extends from the opening, and the housing is connected to the cover body.

3. The battery structure according to claim 2, wherein an upper end surface is arranged on the housing, a connecting wall extends from the cover body, a lower end surface is arranged on the connecting wall, and the upper end surface is connected to the lower end surface.

4. The battery structure according to claim 3, wherein the upper end surface is welded to the lower end surface, to implement a sealing connection.

5. The battery structure according to claim 3, wherein a thickness of the connecting wall is the same as a thickness of the housing.

6. The battery structure according to claim 5, wherein the thickness of the housing ranges from 0.1 mm to 0.25 mm.

7. The battery structure according to claim 2, wherein the insulating layer is an insulating ring, and a width of the insulating ring is greater than a width in which the pressing plate overlaps the cover body.

8. The battery structure according to claim 7, wherein the width in which the pressing plate overlaps the cover body ranges from 0.5 mm to 10 mm.

9. The battery structure according to claim 2, wherein the housing is in a shape of a cylinder, and a cross section of the housing is in a shape of an ellipse, a square, or a heart.

10. A preparation method for a battery structure, using the battery structure according to any one of claims 2 to 9, and comprising the following steps:
placing the insulating layer between the cover body and the pressing plate, and then assembling, heating, and cooling the cover body and the pressing plate, to form the cap assembly;
placing the electrode assembly into the housing, and then electrically connecting two electrodes of the electrode assembly to the cap assembly and the housing respectively; and
injecting the electrolyte into the housing, and then welding and sealing the cap assembly and the housing, to complete preparation of the battery structure.
